Europäisches Patentamt

European Patent Office

Office européen des brevets

(19)

(11) Veröffentlichungsnummer: **0 235 360**
**B1**

(12) **EUROPÄISCHE PATENTSCHRIFT**

(45) Veröffentlichungstag der Patentschrift:
24.01.90

(21) Anmeldenummer: 86115534.9

(22) Anmeldetag: 08.11.86

(51) Int. Cl.⁴: **G01F 1/68**, G01F 1/72,
F02D 41/18

(54) **Messonde.**

(30) Priorität: 03.03.86 DE 3606853

(43) Veröffentlichungstag der Anmeldung:
09.09.87 Patentblatt 87/37

(45) Bekanntmachung des Hinweises auf die Patenterteilung:
24.01.90 Patentblatt 90/4

(84) Benannte Vertragsstaaten:
DE FR GB IT SE

(56) Entgegenhaltungen:
DE-A- 2 929 427
DE-A- 3 127 081
DE-A- 3 208 096
US-A- 4 276 773
US-A- 4 566 320

(73) Patentinhaber: VDO Adolf Schindling AG,
Gräfstrasse 103, D-6000 Frankfurt/Main 90(DE)

(72) Erfinder: Porth, Wolfgang, Röhrborngasse 70,
D-6000 Frankfurt am Main 60(DE)
Erfinder: Weibler, Wolfgang, Dr., Vor der Heide 14,
D-6238 Hofheim a. T.(DE)

(74) Vertreter: Klein, Thomas, Dipl.-Ing. (FH), Sodener
Strasse 9 Postfach 6140, D-6231 Schwalbach a. Ts.(DE)

ACTORUM AG

## Beschreibung

Die Erfindung betrifft eine Meßsonde zur Messung der Masse eines strömenden Mediums, insbesondere der Ansaugluft einer Brennkraftmaschine, mit mindestens einem in der Strömung des Mediums angeordneten temperaturabhängigen ersten Widerstand, der Teil einer Brückenschaltung ist und dessen Temperatur und/oder Widerstand in Abhängigkeit von der strömenden Masse geregelt wird, wobei die Stellgröße ein Meß für die Masse des strömenden Mediums ist und wobei ein zweiter Widerstand, der der Brückenschaltung parallelgeschaltet ist, dem ersten Widerstand stromabwärts im Medium nachgelagert ist, nach der Gattung des Hauptanspruchs.

Eine Meßsonde dieser Art ist aus der US-A 4 566 320 bekannt. Dort erfolgt die richtungsabhängige Messung der Masse des strömenden Mediums mittels zweier, in verschiedenen Zweigen einer Brückenschaltung angeordneter temperaturabhängigen Widerständen. Zu dieser Brückenschaltung parallel geschaltete weitere Widerstände sind ebenfalls dem strömenden Medium ausgesetzt.

Aus der DE-A-2 929 427 ist ferner eine Einrichtung zur Luftmassenmessung im Luftansaugrohr einer Brennkraftmaschine bekannt, bei der ebenfalls mindestens ein temperaturabhängiger Widerstand Bestandteil einer Brückenschaltung ist, deren Strom geregelt wird. Dabei sind die temperaturabhängigen Widerstände als Hitzdrähte ausgebildet.

Bei anderen bekannten elektro-thermischen Luftmassensensoren wird eine Widerstandsschicht, welche auf einem plattenförmigen Träger aufgebracht ist, von einem Strom durchflossen, der eine Erwärmung zur Folge hat. Je nach Strömungsgeschwindigkeit der den Sensor umströmenden Luft, wird der Widerstandsschicht und dem Träger mehr oder weniger Wärme entzogen. Durch Verwendung eines Widerstandsmaterials mit positivem oder negativem Temperaturkoeffizienten kann der Strom derart geregelt werden daß eine konstante Übertemperatur gegenüber der Luft erzielt wird. Der dazu benötigte Strom ist dann ein Maß für die Strömungsgeschwindigkeit.

Ein wichtiges Anwendungsgebiet derartiger Sensoren ist die Messung der von Brennkraftmaschinen angesaugten Luftmasse. Diese Messung ist insbesondere wichtig, um den Verbrennungsvorgang der Brennkraftmaschine im Sinne einer Minimierung der Schadstoffanteile bei der Verbrennung zu steuern.

Insbesondere bei Ottomotoren gibt es Betriebszustände mit pulsierender Strömung oder gar Ruckströmung, die bei bekannten Luftmassenmessern zu Fehlmessungen führen.

Ferner hat es sich herausgestellt, daß die örtliche Wärmeübergangszahl in der Nähe derjenigen Kante des Sensors, welche der Luftströmung entgegensteht am größten ist und mit zunehmender Entfernung von dieser Kante abnimmt. Dadurch entsteht in Strömungsrichtung ein Temperaturgradient längs der Widerstandsschicht und des Trägers, der von der Strömungsgeschwindigkeit abhängig ist und eine relativ große Ansprechzeit der bekannten Sensoren bedingt.

Zur Verringerung der Ansprechzeit ist es bereits bekannt geworden, die in der Widerstandsschicht erzeugten Stromlaufbahnen so zu dimensionieren, daß die resultierende elektrische Heizleistung pro Flächeneinheit in einem konstanten Verhältnis zur örtlichen Wärmeübergangszahl steht.

Die erfindungsgemäße Meßsonde nach dem Gattungsbegriff ist dadurch gekennzeichnet, daß dem ersten Widerstand stromaufwärts im Medium unmittelbar ein dritter Widerstand, welcher ebenfalls Teil der Brückenschaltung ist und mit dem ersten Widerstand in Reihe geschaltet ist, vorgelagert ist. Dadurch, daß der dritte Widerstand in Reihe mit dem ersten Widerstand geschaltet ist und somit ein entsprechend großer Strom durch den dritten Widerstand fließt, wird dieser Widerstand ebenfalls aufgeheizt. Da der dritte Widerstand stromaufwärts im Medium angeordnet ist, strömt das Medium bereits über den dritten Widerstand, bevor es den ersten Widerstand überstreicht. Damit wird die örtliche Abhängigkeit mit der Wärmeübergangszahl auf dem ersten Widerstand geringer, so daß die Ansprechzeit gegenüber bekannten Anordnungen verkürzt wird.

Weitere Ausführungsformen der Erfindung bestehen darin, daß die Widerstände als Schichten auf einem gemeinsamen Träger aufgebracht sind oder daß die Widerstände als Schichten auf mehreren Trägern aufgebracht sind. Die Aufbringung der Widerstände als Schichten auf einen gemeinsamen Träger hat den Vorteil, daß die Schichten in einem Arbeitsgang aufgebracht werden können. Dabei sind jedoch Grenzen bezüglich der Auslegung der elektrischen und sonstigen Eigenschaften gegeben. Bei der Aufbringung der Schichten auf mehrere Träger können beispielsweise verschiedene Technologien angewandt werden, um stark voneinander abweichende Eigenschaften der Widerstände zu erzielen.

Eine andere Weiterbildung der Erfindung ist dadurch gekennzeichnet, daß der Träger durch Schlitze zwischen den Schichten der Widerstände strukturiert ist. Dadurch ist eine thermische Entkopplung der Widerstände - soweit erforderlich - möglich.

Gemäß einer anderen Weiterbildung der Erfindung ist der Temperaturkoeffizient des dritten Widerstandes dem Betrage nach wesentlich kleiner als der Temperaturkoeffizient des ersten Widerstandes.

Eine andere Weiterbildung, bei welcher der Temperaturkoeffizient des dritten Widerstandes ein gegenüber dem Vorzeichen des Temperaturkoeffizienten des ersten Widerstandes umgekehrtes Vorzeichen aufweist, hat den Vorteil, daß eine starke Abhängigkeit der Spannung an der Brückendiagonale von der Temperatur besteht.

Eine andere Weiterbildung der Erfindung ist dadurch gekennzeichnet, daß der zweite Widerstand denselben Temperaturkoeffizienten wie der erste Widerstand hat. Diese Weiterbildung ermöglicht, daß der erste und der zweite Widerstand nach dem gleichen Verfahren hergestellt werden können.

Eine andere Weiterbildung der Erfindung besteht darin, daß der zweite Widerstand einen anderen Temperaturkoeffizienten als der erste Widerstand hat. Diese Weiterbildung erfordert zwar Unterschiede bei der Herstellung der Widerstände, es ist jedoch eine Anpassung des Temperaturkoeffizienten des zweiten Widerstandes an die Erfordernisse unabhängig von der Auslegung des ersten Widerstandes möglich.

Eine weitere Ausführungsform der Erfindung ist dadurch gekennzeichnet, daß die Widerstände durch mäanderförmige Stromlaufbahnen gebildet sind, deren Breite sich in Strömungsrichtung des Mediums derart ändert, daß die Verteilung der Heizleistung, die Strömungsgrenzschicht und/oder die Temperaturgrenzschicht sich derart ausbilden, daß bei plötzlicher Änderung der Strömungsgeschwindigkeit auf der Meßsonde keine das Ansprechen der Meßsonde verzögernden Temperaturausgleichsvorgänge stattfinden. Diese Ausführungsform bewirkt eine weitere Verkürzung der Ansprechzeit.

Eine andere Weiterbildung der Erfindung besteht darin, daß in Richtung der Strömung gemessen die Länge des ersten Widerstandes kleiner als die Länge des dritten Widerstandes und diese wiederum kleiner als die Länge des zweiten Widerstandes ist. Mit dieser Weiterbildung wird sowohl eine geringe Ansprechzeit als auch eine ausgeprägte Richtungsempfindlichkeit der Meßsonde erzielt.

Eine weitere Verbesserung der erfindungsgemäßen Meßsonde wird dadurch erreicht, daß die Schichten der Widerstände durch Strukturierung der Stromlaufbahnen und/oder der Schichtdicken und/oder des spezifischen Widerstandes und durch Wahl der Widerstandswerte derart ausgelegt sind, daß die auf ihnen bei konstanter Medientemperatur auftretenden mittleren Temperaturen in einem annähernd festen Verhältnis zueinander stehen.

Die zu der Meßsonde gehörende Regelschaltung kann in vorteilhafter Weise derart ausgelegt werden, daß der erste und der dritte Widerstand einen ersten Zweig der Brückenschaltung bilden und daß in einem zweiten Zweig der Brückenschaltung ein temperaturabhängiger vierter Widerstand im Medium angeordnet ist, der die Temperatur des Mediums annimmt und über die Regelung bewirkt, daß der erste, der zweite und der dritte Widerstand eine von der Temperatur des Mediums abhängige, jedoch höhere Temperatur annehmen.

Bei einer weiteren Ausführungsform der Erfindung ist vorgesehen, daß zu den die Brückenschaltung bildenden Widerständen geeignete temperaturunabhängige Widerstände parallel und/oder in Reihe geschaltet sind. Dadurch ist eine Anpassung der Temperaturkoeffizienten der Widerstände an verschiedene Erfordernisse möglich.

Um eine möglichst hohe Temperaturabhängigkeit der Spannung der Brückendiagonale zu erzielen, sind jeweils in einem Brückenzweig etwa gleich große Widerstände vorgesehen. Damit wird auch die in den Widerständen eines Brückenzweiges umgesetzte Leistung etwa gleich groß. Bei bekannten Anordnungen führt das dazu, daß die von dem in Reihe mit dem ersten Widerstand geschalteten Widerstand erzeugte Verlustleistung ungenutzt bleibt. Dadurch die Anordnung des zweiten Widerstandes stromaufwärts im Medium wird die Verlustleistung zu einer Verringerung der Ansprechzeit genutzt. Eine weitere Nutzung dieser Verlustleistung kann in einer teilweisen Fremdheizung des ersten Widerstandes bestehen, womit eine Verringerung des gesamten Leistungsbedarfs der erfindungsgemäßen Sonde verbunden ist. Schließlich ergibt sich durch die erfindungsgemäße Anordnung des dritten Widerstandes eine Kühlung des dritten Widerstandes durch den Luftstrom, während er sich bei bekannten Anordnungen in der Nähe von elektronischen Schaltungen befindet und diese thermisch belastet.

Zur teilweisen Fremdheizung des ersten Widerstandes durch den dritten Widerstand trägt eine Weiterbildung der Erfindung bei, die dadurch gekennzeichnet ist, daß mindestens ein Teil der Stromlaufbahnen des dritten Widerstandes mit den Stromlaufbahnen des ersten Widerstandes verzahnt ist.

Gemäß einer anderen Weiterbildung wird ein Wärmekontakt zwischen dem ersten und dem dritten Widerstand dadurch ermöglicht, daß sich ein Teil der Schichten des ersten und des dritten Widerstandes überlappen, wobei eine elektrische Isolationsschicht zwischen beiden Schichten vorgesehen ist.

Schließlich besteht eine Weiterbildung der Erfindung darin, daß der vierte Widerstand und der erste Widerstand als Schichten auf einem gemeinsamen Träger ausgeführt sind. Diese Maßnahme trägt zu einer weiteren Vereinfachung der erfindungsgemäßen Anordnung bei.

Die Erfindung läßt zahlreiche Ausführungsformen zu. Einige davon sind schematisch in der Zeichnung an Hand mehrerer Figuren dargestellt und nachfolgend beschrieben. Es zeigt:

Fig. 1 eine schematische Darstellung einer bekannten Anordnung,

Fig. 2 ebenfalls schematisch ein Ausführungsbeispiel,

Fig. 3 ein Diagramm, das den Verlauf der Wärmeübergangszahl in Strömungsrichtung darstellt und

Fig. 4 und Fig. 5 ausschnittweise Darstellungen verschiedener Ausführungsbeispiele.

Gleiche Teile sind in den Figuren mit gleichen Bezugszeichen versehen.

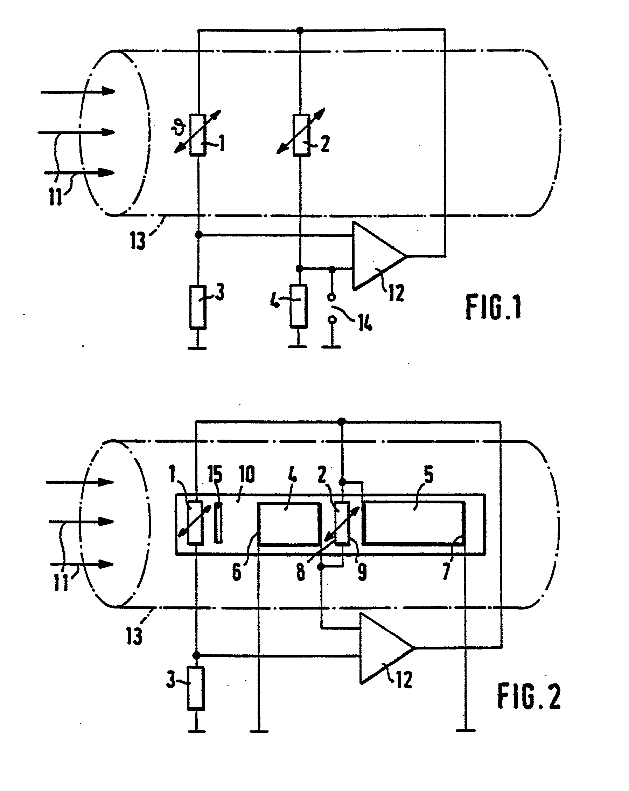

Bei der Anordnung nach Fig. 1 wird in einem Rohr 13 eine Strömung 11 geführt. Das Rohr 13 kann beispielsweise Teil des Ansaugkanals einer Brennkraftmaschine sein, in welchem die zu verbrennende Luft geführt wird. Zur Messung der Luftmasse sind bei der bekannten Anordnung in dem Rohr 13 zwei temperaturabhängige Widerstände 1, 2 vorgesehen. Sie werden mit Hilfe von zwei weiteren Widerständen 3, 4 zu einer Brückenschaltung ergänzt, welche mit einer Spannung beaufschlagt ist, welche die Ausgangsspannung eines Differenzverstärkers 12 ist, dessen Eingänge mit je einem Brückenzweig verbunden sind.

Der erste Brückenzweig, bestehend aus einem temperaturabhängigen Widerstand 2 und einem temperaturunabhängigen Widerstand 4, weist einen relativ kleinen Widerstand auf, so daß der Strom eine Erwärmung der Widerstände 2 und 4 hervorruft, dabei ist lediglich die Erwärmung des im Luftstrom 11 gelegenen Widerstandes 2 zur Funktion der Anordnung nach Fig. 1 erforderlich.

Der zweite Brückenzweig, bestehend aus einem temperaturabhängigen Widerstand 1 und einem temperaturunabhängigen Widerstand 3, wird von einem derart geringen Strom durchflossen, daß praktisch keine Erwärmung gegenüber dem strömenden Medium auftritt. Der zweite Brückenzweig dient somit zur Messung der Temperatur des Luftstroms 11. Damit sich möglichst große Änderungen der Spannung an der Brückendiagonalen ergeben, sind jeweils die Widerstände 1 und 3 bzw. 2 und 4 etwa gleich groß.

Der von der Brückenschaltung und dem Differenzverstärker 12 gebildete Regelkreis wirkt nun derart, daß sich eine konstante Übertemperatur des Widerstandes 2 gegenüber dem Widerstand 1 ergibt. Dabei muß dem Widerstand 2 mehr elektrische Energie zugeführt werden, wenn die durch das Rohr 13 hindurchtretende Luftmasse größer ist. Der Strom durch den ersten Brückenzweig und damit die Spannung, welche am Widerstand 4 abfällt, ist somit ein Maß für die Luftmasse.

Bei dem Ausführungsbeispiel nach Fig. 2 ist der zweite Brückenzweig, welcher aus dem temperaturabhängigen Widerstand 1 und dem temperaturunabhängigen Widerstand 3 besteht, in ähnlicher Weise wie bei der Anordnung nach Fig. 1 ausgestaltet. Bei dem ersten Brückenzweig ist jedoch der Widerstand 4 in das Rohr 13 aufgenommen. Außerdem ist ein weiterer Widerstand 5 stromabwärts im Rohr 13 angeordnet. Elektrisch liegt der Widerstand 5 parallel zur Brückenschaltung.

Der erste Widerstand 2 ist wie bei der Anordnung nach Fig. 1 der eigentliche Meßwiderstand, der über die Temperatur der Luft hinaus aufgeheizt wird und dessen Wärmeabgabe als Maß für die durch das Rohr 13 hindurchtretende Luftmasse verwendet wird. Der zweite Widerstand 5 ist derart bemessen, daß der durch ihn führende Strom ihn über die Umgebungstemperatur hinaus aufheizt. Auch vom dritten Widerstand 4 wird Wärme an den Luftstrom abgegeben.

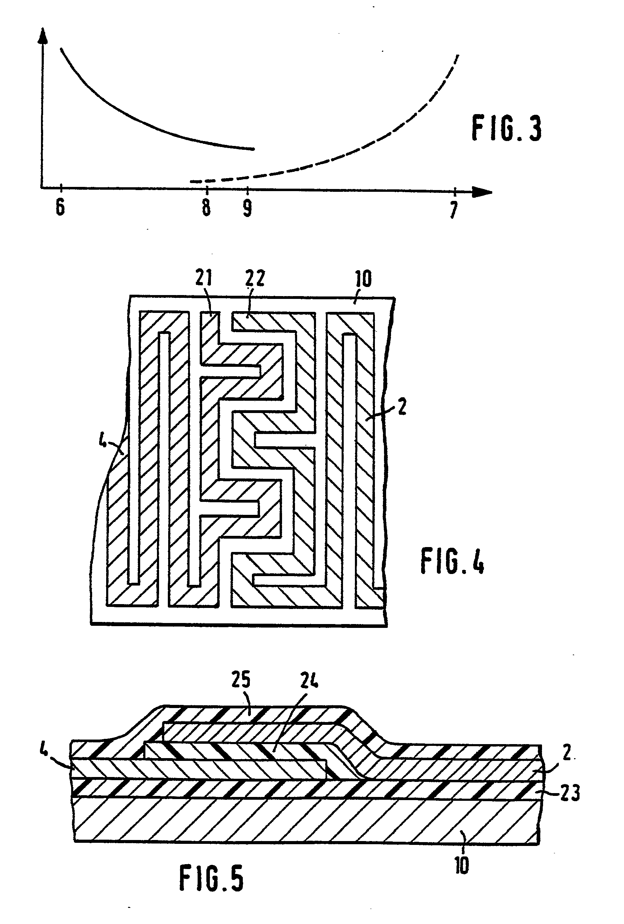

Zur weiteren Erläuterung der Erfindung wird zusätzlich auf Fig. 3 Bezug genommen. Das in Fig. 3 dargestellte Diagramm zeigt die Wärmeübergangszahl als Funktion des Abstandes von derjenigen Kante eines Sensors, welche der Strömung entgegengerichtet ist. Dabei ist bei 6 der Ort der Kante 6 (Fig. 2) des Widerstandes 4 und bei 7 der Ort der Kante 7 des Widerstandes 5 dargestellt. Die durchgezogene Kurve gilt für eine Strömung in Vorwärtsrichtung, wie sie in Fig. 2 mit Pfeilen angedeutet ist, während die gestrichelte Kurve die Wärmeübergangszahl im Falle einer Rückströmung darstellt. Zwischen den Punkten 8 und 9, welche die Kanten des Widerstandes 2 wiedergeben, liegt die Fläche des Widerstandes 2.

Durch die geometrischen Abmessungen des ersten Widerstandes 2, des zweiten Widerstandes 5 und des dritten Widerstandes 4 wird nun erreicht, daß bei einer Vorwärtsströmung die Fläche des ersten Widerstandes 2 in einem Teil der Kurve liegt, in welchem die Kurve relativ flach verläuft, so daß innerhalb des ersten Widerstandes 2 nur unwesentliche Temperaturunterschiede entstehen, was zu einer geringen Ansprechzeit führt.

Die gestrichelte Kurve für die Rückströmung liegt innerhalb des Bereichs des ersten Widerstandes wesentlich unter derjenigen Kurve für die Vorwärtsströmung. Bei der Rückströmung ist also die Wärmeübergangszahl des ersten Widerstandes 2 wesentlich geringer. Dadurch ist sichergestellt, daß bei einer Rückströmung eine geringe Ausgangsspannung entsteht, welche durch eine entsprechende Auswerteschaltung erkannt werden kann.

Bei dem in Fig. 2 dargestellten Ausführungsbeispiel sind die Widerstände 1, 2, 4, 5 als Schichten auf einem gemeinsamen Träger 10 aufgebracht. Zur besseren thermischen Entkopplung ist zwischen dem dritten Widerstand 4 und dem vierten Widerstand 1 ein Schlitz 15 im Träger 10 vorgesehen. Falls im Einzelfall eine thermische Entkopplung zwischen dem ersten Widerstand einerseits und dem zweiten Widerstand 5 und/oder dem dritten Widerstand 4 andererseits erforderlich sein sollte, können entsprechende Schlitze auch zwischen diesen Widerständen angeordnet sein.

Zur Erzielung einer auswertbaren Ausgangsspannung der Brückenschaltung ist es erforderlich, daß der dritte Widerstand 4 einen vom Temperaturkoeffizienten des ersten Widerstandes 2 abweichenden Temperaturkoeffizienten aufweist. Besonders vorteilhaft ist ein Temperaturkoeffizient mit entgegengesetztem Vorzeichen oder ein temperaturunabhängiger Widerstand. Sollte es sich aus fertigungstechnischen Gründen ergeben, daß ein dritter Widerstand 4 in gleicher Richtung wie der erste Widerstand 2 von der Temperatur abhängig ist, so sollte jedoch der Betrag des Temperaturkoeffizienten des dritten Widerstandes 4 wesentlich kleiner als derjenige des ersten Widerstandes 2 sein.

Eine thermische Kopplung zwischen dem ersten Widerstand 2 und dem dritten Widerstand 4 kann durch mehrere Weiterbildungen der Erfindung erzielt werden. Zwei Ausführungsbeispiele dazu sind in den Figuren 4 und 5 dargestellt.

Fig. 4 zeigt die Draufsicht auf einen Ausschnitt des Trägers 10 mit den benachbarten Teilen des ersten Widerstandes 2 und des dritten Widerstandes 4. Beide Widerstände sind als mäanderförmige Leiterbahnen auf den Träger 10 aufgebracht und in Fig. 4 schraffiert dargestellt. Zur Verbesserung des Wärmeübergangs zwischen den Widerständen sind die Leiterbahnen in Randbereichen ineinander verzahnt. Die Enden 21, 22 der Leiterbahnen sind mit entsprechender Kontaktierung versehen, welche im einzelnen nicht dargestellt sind, und den jeweils einen Anschluß des ersten Widerstandes 2 und des dritten Widerstandes 4 bilden. Die anderen Anschlüsse befinden sich außerhalb des gezeigten Ausschnitts des Trägers 10.

Eine andere Möglichkeit zur Erzielung eines Wärmekontakts zwischen dem ersten und dem dritten Widerstand ist in Fig. 5 als Schnitt dargestellt. Dabei sind insbesondere die Stärken des Trägers und der Schichten stark vergrößert dargestellt. Auf dem Träger 10 ist eine Isolierschicht 23 aufgebracht, welche gegebenenfalls auch entfallen kann, wenn der Träger 10 selbst genügend gute Isolatoreigenschaften hat. Die Schichten des ersten Widerstandes 2 und des dritten Widerstandes 4 überlappen sich zum Teil, wobei sie durch eine isolierende Schicht 4 elektrisch voneinander getrennt sind. Ferner ist eine elektrisch isolierende Schutzschicht 25 aufgebracht. Je nach erforderlicher thermischer Kopplung kann ein mehr oder weniger großer Anteil des ersten Widerstandes 2 bzw. des zweiten Widerstandes 4 überlappend angeordnet sein.

## Patentansprüche

1. Meßsonde zur Messung der Masse eines strömenden Mediums, insbesondere der Ansaugluft einer Brennkraftmaschine, mit mindestens einem in der Strömung des Mediums angeordneten temperaturabhängigen ersten Widerstand (2), der Teil einer Brückenschaltung ist und dessen Temperatur in Abhängigkeit von der strömenden Masse geregelt wird, wobei die Stellgröße ein Maß für die Masse des strömenden Mediums ist und wobei ein zweiter Widerstand (5), der der Brückenschaltung parallel geschaltet ist, dem ersten Widerstand (2) stromabwärts im Medium nachgelagert ist, dadurch gekennzeichnet, daß dem ersten Widerstand (2) stromaufwärts im Medium unmittelbar ein dritter Widerstand (4), welcher ebenfalls Teil der Brückenschaltung ist und mit dem ersten Widerstand (2) in Reihe geschaltet ist, vorgelagert ist.

2. Meßsonde nach Anspruch 1, bei der die Widerstände (2, 4, 5) als Schichten auf einem gemeinsamen Träger (10) aufgebracht sind, dadurch gekennzeichnet, daß der Träger (10) durch Schlitze zwischen den Schichten der Widerstände (2, 4, 5) strukturiert ist.

3. Meßsonde nach Anspruch 1, dadurch gekennzeichnet, daß die Widerstände (2, 4, 5) als Schichten auf mehreren Trägern aufgebracht sind.

4. Meßsonde nach einem der Ansprüche 1 bis 3, dadurch gekennzeichnet, daß der Temperaturkoeffizient des dritten Widerstandes (4) ein gegenüber dem Vorzeichen des Temperaturkoeffizienten des ersten Widerstandes (2) umgekehrtes Vorzeichen aufweist.

5. Meßsonde nach einem der vorhergehenden Ansprüche, dadurch gekennzeichnet, daß der zweite Widerstand (5) denselben Temperaturkoeffizienten wie der erste Widerstand (2) hat.

6. Meßsonde nach einem der Ansprüche 1 bis 4, dadurch gekennzeichnet, daß der zweite Widerstand (5) einen anderen Temperaturkoeffizienten als der erste Widerstand (2) hat.

7. Meßsonde nach einem der vorhergehenden Ansprüche, dadurch gekennzeichnet, daß die Widerstände (2, 4, 5) dadurch mäanderförmige Stromlaufbahnen gebildet sind, deren Breite sich in Strömungsrichtung des Mediums derart ändert, daß die Verteilung der Heizleistung, die Strömungsgrenzschicht und/oder die Temperaturgrenzschicht sich derart ausbilden, daß bei plötzlicher Änderung der Strömungsgeschwindigkeit auf der Meßsonde keine das Ansprechen der Meßsonde verzögernden Temperaturausgleichsvorgänge stattfinden.

8. Meßsonde nach einem der vorhergehenden Ansprüche, dadurch gekennzeichnet, daß in Richtung der Strömung gemessen die Länge des ersten Widerstandes (2) kleiner ist als die Länge des dritten Widerstandes (4) und diese wiederum kleiner als die Länge des zweiten Widerstandes (5) ist.

9. Meßsonde nach einem der vorhergehenden Ansprüche, dadurch gekennzeichnet, daß die Schichten der Widerstände (2, 4, 5) durch Strukturierung der Stromlaufbahnen und/oder der Schichtdicken und/oder des spezifischen Widerstandes und durch Wahl der Widerstandswerte derart ausgelegt sind, daß die auf ihnen bei konstanter Medientemperatur auftretenden mittleren Temperaturen in einem annähernd festen Verhältnis zueinander stehen

10. Meßsonde nach Anspruch 9, dadurch gekennzeichnet, daß der erste und der dritte Widerstand einen ersten Zweig der Brückenschaltung bilden und daß in einem zweiten Zweig der Brückenschaltung ein temperaturabhängiger vierter Widerstand (1) im Medium angeordnet ist, der die Temperatur des Medium annimmt und über die Regelung bewirkt, daß der erste, der zweite und der dritte Widerstand (2, 4, 5) eine von der Temperatur des Mediums abhängige, jedoch höhere Temperatur annehmen.

11. Meßsonde nach Anspruch 7, dadurch gekennzeichnet, daß mindestens ein Teil der Stromlaufbahnen des dritten Widerstandes (4) mit den Stromlaufbahnen des ersten Widerstandes (2) verzahnt ist.

12. Meßsonde nach Anspruch 1, dadurch gekennzeichnet, daß sich ein Teil der Schichten des ersten und des dritten Widerstandes (2, 4) überlappen, wobei eine elektrische Isolationsschicht zwischen beiden Schichten vorgesehen ist.

13. Meßsonde nach Anspruch 10, dadurch gekennzeichnet, daß der vierte Widerstand (1) und der erste Widerstand (2) als Schichten auf einem gemeinsamen Träger ausgeführt sind.

## Claims

1. Measuring probe for measuring the mass of a flowing medium in particular the intake air of an internal combustion engine, having at least one temperature-dependent first resistor (2) which is arranged in the flow of the medium is part of a bridge circuit and whose temperature is regulated as a function of the flowing mass, the regulating quantity being a measure for the mass of the flowing medium and a second resistor (5) which is connected in parallel with the bridge circuit being placed downstream of the first resistor (2) in the medium, characterized in that a third resistor (4), which is likewise part of the bridge circuit and is connected in series with the first resistor (2), is placed directly upstream of the first resistor (2) in the medium.

2. Measuring probe according to Claim 1, in which the resistors (2, 4, 5) are applied as layers to a common support (10), characterized in that the support (10) is structured by means of slots between the layers of the resistors (2, 4, 5).

3. Measuring probe according to Claim 1, characterized in that the resistors (2, 4, 5) are applied as layers to a plurality of supports.

4. Measuring probe according to one of Claims 1 to 3, characterized in that the temperature coefficient of the third resistor (4) has a sign which is the reverse of the sign of the temperature coefficient of the first resistor (2).

5. Measuring probe according to one of the preceding claims, characterized in that the second resistor (5) has the same temperature coefficient as the first resistor (2).

6. Measuring probe according to one of Claims 1 to 4, characterized in that the second resistor (5) has a different temperature coefficient to the first resistor (2).

7. Measuring probe according to one of the preceding claims, characterized in that the resistors (2, 4, 5) are formed by meander-shaped current flow tracks, the width of which changes in the direction of flow of the medium in such a way that the distribution of the heat output, the flow boundary layer and/or the thermal boundary layer form in such a way that in the event of a sudden change of the flow rate on the measuring probe, no temperature equalization processes delaying the response of the measuring probe take place.

8. Measuring probe according to one of the preceding claims, characterized in that, measured in the direction of flow, the length of the first resistor (2) is less than the length of the third resistor (4) and the latter in turn is less than the length of the second resistor (5).

9. Measuring probe according to one of the preceding claims, characterized in that, by structuring the current flow tracks and/or the layer thicknesses and/or the specifio resistance and by selection of the resistance values, the layers of the resistors (2, 4, 5) are designed in such a way that the mean temperatures occurring on them at constant temperature of the medium bear an approximately fixed relationship to one another.

10. Measuring probe according to Claim 9, characterized in that the first and the third resistor form a first branch of the bridge circuit and in that a temperature-dependent fourth resistor (1) is arranged in the medium in a second branch of the bridge circuit, which resistor assumes the temperature of the medium and, via the regulation system, causes the first, the second and the third resistor (2, 4, 5) to assume a temperature which is dependent on the temperature of the medium but is higher.

11. Measuring probe according to Claim 7, characterized in that at least a part of the current flow tracks of the third resistor (4) is interdigitated with the current flow tracks of the first resistor (2).

12. Measuring probe according to Claim 1, characterized in that a part of the layers of the first and the third resistor (2, 4) overlap, an electric insulation layer being provided between the two layers.

13. Measuring probe according to Claim 10, characterized in that the fourth resistor (1) and the first resistor (2) are designed as layers on a common support.

**Revendications**

1. Palpeur ou sonde pour mesurer la masse d'un milieu en écoulement, en particulier l'air d'admission d'un moteur à combustion interne, cette sonde comportant au moins une première résistance (2) dépendant de la température, qui est disposée dans l'écoulement du milieu, fait partie d'un circuit en pont et dont la température est régulée en fonction de la masse en écoulement, la grandeur de réglage constituant une mesure de la masse du milieu en écoulement, et une seconde résistance (5), montée en parallèle avec le circuit en pont, étant montée en aval de la première résistance (2) dans le sens de l'écoulement du milieu sonde caractérisée en ce qu'une troisième résistance (4) qui fait également partie du circuit en pont et est montée en série avec la première résistance (2), est placée directement en amont de la première résistance (2), par rapport au sens d'écoulement du milieu.

2. Sonde de mesure selon la revendication 1, dans laquelle les résistances (2, 4, 5) sont appliquées sous forme de couches sur un support (10) commun, sonde caractérisée en ce que le support (10) est structuré grâce à des fentes ménagées entre les couches des résistances (2, 4, 5).

3. Sonde de mesure selon la revendication 1, caractérisée en ce que les résistances (2, 4, 5) sont appliquées sous forme de couches sur plusieurs supports.

4. Sonde de mesure selon l'une des revendications 1 à 3, caractérisée en ce que le coefficient de température de la troisième résistance (4) présente un signe inverse du signe du coefficient de température de la première résistance (2).

5. Sonde de mesure selon l'une quelconque des revendications précédentes, caractérisée en ce que la seconde résistance (5) a le même coefficient de température que la première résistance (2).

6. Sonde de mesure selon l'une des revendications 1 à 4, caractérisée en ce que la seconde résistance (5) a un autre coefficient de température que la première résistance (2).

7. Sonde de mesure selon l'une des revendications précédentes, caractérisée en ce que les résistances (2, 4, 5) sont constituées par des trajets en méandres de passage du courant, dont la largeur varie, dans le sens d'écoulement du milieu, de façon que la répartition de la charge thermique, de la couche limite d'écoulement et/ou de la couche limite de température s'établisse de manière telle qu'en cas de variation brutale de la vitesse d'écoulement sur la sonde de mesure, il ne se produise pas sur la sonde de mesure de processus d'égalisation de température ralentissant la réponse de cette sonde de mesure.

8. Sonde de mesure selon l'une des revendications précédentes, caractérisée en ce que, mesurées dans le sens de l'écoulement, la longueur de la première résistance (2) est plus courte que la longueur de la troisième résistance (4) et cette dernière est à son tour plus courte que la longueur de la seconde résistance (5).

9. Sonde de mesure selon l'une des revendications précédentes, caractérisée en ce que les couches des résistances (2, 4, 5) sont réalisées, par structuration des trajets d'écoulement du courant et/ou des épaisseurs de couche et/ou de la résistance spécifique et par le choix des valeurs de résistance, de manière que les températures moyennes apparaissant sur ces résistances en cas de température constante du milieu présentent un rapport mutuel approximativement fixe.

10. Sonde de mesure selon la revendication 9, caractérisée en ce que les première et troisième résistances constituent une première branche du circuit en pont et en ce que, dans une seconde branche du circuit en pont, est disposée dans le milieu une quatrième résistance (1) dépendant de la température, qui prend la température du milieu et agit, par l'intermédiaire de la régulation, de manière que les première, seconde et troisième résistances (2, 4, 5) prennent une température, qui dépend de la température du milieu mais est cependant supérieure.

11. Sonde de mesure selon la revendication 7, caractérisée en ce qu'au moins une partie des trajets de passage du courant dans la troisième résistance (4) est imbriquée dans les trajets de passage du courant dans la première résistance (2).

12. Sonde de mesure selon la revendication 1, caractérisée en ce que les couches des première et troisiéme résistances (2, 4) se chevauchent en partie, raison pour laquelle on prévoit l'existance d'une couche d'isolation électrique entre les deux couches.

13. Sonde de mesure selon la revendication 10, caractérisée en ce que la quatrième résistance (1) et la première résistance (2) sont réalisées sous forme de couches sur un support commun.

FIG.1

FIG.2

FIG.3

FIG.4

FIG.5